# EUROPEAN PATENT SPECIFICATION

(11) **EP 4 214 987 B1**
(45) Date of publication and mention of the grant of the patent: **31.12.2025**
(21) Application number: 20958171.9
(22) Date of filing: 22.10.2020
(51) Int. Cl.: H04W 72/04, H04W 4/06, H04W 76/40

(54) **MULTICASE BROADCAST SERVICE RESOURCE CONFIGURATION AND UPDATE**
KONFIGURATION UND AKTUALISIERUNG VON MULTICAST-BROADCAST-DIENSTRESSOURCEN
CONFIGURATION ET MISE À JOUR DE RESSOURCES DE SERVICE DE DIFFUSION MULTIDIFFUSION

(43) Date of publication of application: 26.07.2023
(73) Proprietor: ZTE Corporation, Shenzhen, Guangdong 518057 (CN)
(72) Inventor: QI, Tao, Shenzhen, Guangdong 518057 (CN); CHEN, Lin, Shenzhen, Guangdong 518057 (CN); WANG, Liping, Shenzhen, Guangdong 518057 (CN); ZHU, Hao, Shenzhen, Guangdong 518057 (CN)
(74) Representative: Vossius & Partner Patentanwälte Rechtsanwälte mbB
(86) International application number: PCT/CN2020/122776
(87) International publication number: WO 2022/082588

(56) References cited:
- WO-A1-2011/035484
- CN-A- 1 735 231
- CN-A- 101 155 328
- CN-A- 102 196 360
- CN-A- 102 238 478
- CN-A- 102 821 362
- CN-A- 104 717 614
- US-A1- 2012 327 935
- US-B2- 10 015 641
- US-B2- 10 645 675
- HUAWEI ET AL: "IDLE/INACTIVE UE support for NR MBS", vol. RAN WG2, no. Electronic meeting; 20200817 - 20200828, 7 August 2020 (2020-08-07), XP051911877, Retrieved from the Internet <URL:https://ftp.3gpp.org/tsg_ran/WG2_RL2/TSGR2_111-e/Docs/R2-2007029.zip R2-2007029.docx> [retrieved on 20200807]

## Description

### TECHNICAL FIELD

This disclosure is generally directed to Multicast/Broadcast Service (MBS) configuration dissemination for improving network efficiency.

### BACKGROUND

There has always been a demand for Multicast Broadcast Services (MBS) in wireless communication networks. In particular, mission critical communication services may be implemented by using MBS. Increasing network resources utilization efficiency while still being able to meet the uplink data latency requirement are desirable for supporting more users in a cell.

US 2012/327935 A1, CN 102 196 360 A, 3GPP Draft R2-2007029 and US 10 015 641 B2 are documents of the related art.

### SUMMARY

This disclosure relates to methods and devices for MBS configuration dissemination as well as MBS status report and feedback between base stations and terminal devices.

The invention is specified by the independent claims. Preferred embodiments are defined in the dependent claims. In the following description, although numerous features may be designated as optional, it is nevertheless acknowledged that all features comprised in the independent claims are not to be read as optional.

In some implementations, a method for receiving multicast broadcast service (MBS) by a user equipment (UE) in a wireless network is disclosed. The method may include receiving a first message comprising a first MBS configuration associated with the MBS from a first network element of the wireless network; and receiving an MBS configuration update notification from the first network element.

In some other implementations, a method for sending transmission mode switch request or MBS reception report to a first network element in a wireless network by a user equipment (UE) receiving MBS in the wireless network is disclosed. The method may include receiving a first MBS configuration associated with the MBS from a first network element of the wireless network; and in response to a predefined event occurring, sending an RRC resume message to the first network element.

In some other implementations, a method transmitting MBS by a first network element in a wireless network is disclosed. The method may include sending a first message comprising a first MBS configuration associated with the MBS to a User Equipment (UE) of the wireless network; and sending an MBS configuration update notification to the UE.

A network element and/or UE is further disclosed. The network element and/or UE includes a processor and a memory, wherein the processor is configured to read computer code from the memory to implement the method above. A computer-readable medium is further disclosed. The computer-readable medium includes instructions or a computer program which, when executed by a wireless terminal, cause the wireless terminal to carry out the method above.

The above embodiments and other aspects and alternatives of their implementations are described in greater detail in the drawings, the descriptions, and the claims below.

### BRIEF DESCRIPTION OF THE DRAWINGS

FIG. 1 shows an exemplary wireless communication network.
FIG. 2 shows an exemplary procedure for a User Equipment (UE) to receive triggering event including a MBS configuration update notification from a base station.
FIG. 3 shows an exemplary reception configuration for a UE to receive updated MBS configuration.
FIG. 4 shows an exemplary procedure for a UE to receive MBS data.
FIG. 5 shows another exemplary procedure for a UE to receive MBS data.

### DETAILED DESCRIPTION

The following description and drawing set forth certain illustrative implementations of the disclosure in detail, which are indicative of several example manners in which the various principles of the disclosure may be carried out. The illustrated examples, however, are not exhaustive of the many possible embodiments of the disclosure. Other objects, advantages and novel features of the disclosure will be set forth in the following detailed description when considered in conjunction with the drawings.

### Introduction

Multicast Broadcast Services (MBS) has been provided in wireless systems to some extent. One of such examples includes mission critical communication service such as Mission Critical Push to Talk (MCPTT) over MBS. For an MCPTT service, once the uplink unicast radio bearer (typically Guaranteed Bit Rate (GBR) ) is established for a group call, it stays allocated to the UE for the entire duration of the group call, whether the user ever talks or not. However, the traffic model for group call shows that the radio bearer may be actually used relatively rarely, namely only when the user has the floor. In particular, in the case of mission critical broadcast group, only one talker such as a chief officer can have the floor. As such, a lot of uplink resource may be wasted. On the other hand, there may be a large number of users joining an MCPTT session, and the number may exceed the limit a cell may be able to support. When this happens, a user may be denied of service because there is not enough uplink radio resource or access resource.

The various implementations below describes a mechanism for supporting MBS sessions for a UE in various Radio Resource Control (RRC) states: RRC connected (RRC_CONNECTED), RRC inactive (RRC_INACTIVE), and RRC idle (RRC_IDLE) state. The UE may receive MBS data even it is in RRC_INACTIVE or RRC_IDLE state. Under this mechanism, dedicated radio resources is assigned to a UE on demand. That is, the dedicated radio resources is only assigned to a UE when the UE needs to have the floor, or the UE needs to have the dedicated radio resources for some other purposes such as updating some parameters with the base station.

During an MBS session, the MBS configuration may be updated, and the update may be triggered by the base station or the UE. In this disclosure, various mechanisms are described to enable the UE to receive the updated MBS configuration, for UE in different the RRC states. For example, for a UE receiving MBS data in RRC_INACTIVE state, the UE may keep monitoring a MBS configuration update notification. Once the UE receives the notification, the UE may acquire the updated MBS configuration from a broadcast channel without RRC state transition, or the UE may transition to RRC_CONNECTED state first, then receive the updated MBS configuration.

From the perspective of radio access network (RAN), two delivery modes or methods are available for the transmission of MBS packet flows over radio:
- Point-to-Point (PTP) delivery mode/method: a RAN node delivers separate copy of MBS data packet over radio to each individual UE.
- Point-to-Multipoint (PTM) delivery mode/method: a RAN node delivers a single copy of MBS data packets over radio to a set of UEs.

In this disclosure, Point-to-Point (PTP) delivery mode/method may be described as PTP, and Point-to-Multipoint (PTM) delivery mode/method may be described as PTM.

### Wireless Communication Network Architecture

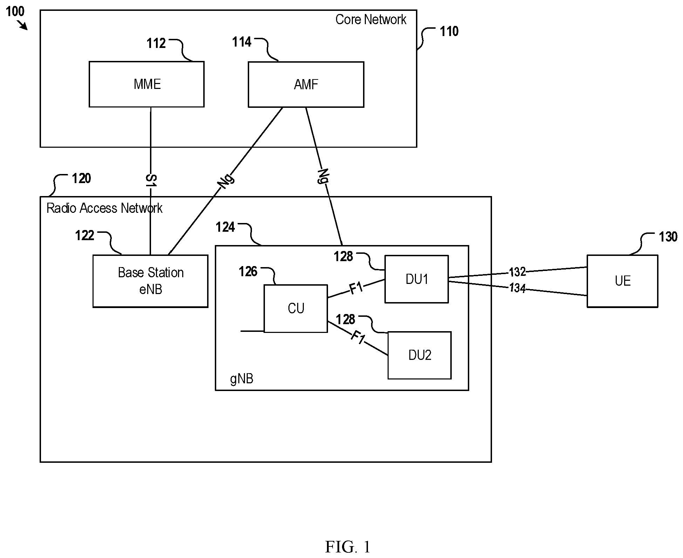

FIG. 1 shows an exemplary wireless communication network 100 that includes a core network 110 and a radio access network (RAN) 120. The core network 110 further includes at least one Mobility Management Entity (MME) 112 and/or at least one Access and Mobility Management Function (AMF) 114. Other functions that may be included in the core network 110 are not shown in FIG. 1. The RAN 120 further includes multiple base stations, for example, base stations (BS) 122 and 124. The base stations may include at least one evolved NodeB (eNB) 122 for 4G LTE, or a next generation NodeB (gNB) 124 for 5G New Radio (NR), or any other type of signal transmitting/receiving access device such as a UMTS NodeB. The example eNB 122 communicates with the MME 112 via an S1 interface. Both the eNB 122 and gNB 124 may connect to the AMF 114 via an Ng interface.

The gNB 124 may further include a central unit (CU) 126 and at least one distributed unit (DU) 128. The CU and the DU may be co-located in a same location, or they may be split in different locations. The CU 126 and the DU 128 may be connected via an F1 interface. Alternatively, for an eNB which is capable of connecting to the 5G network, it may also be similarly divided into a CU and at least one DU, referred to as ng-eNB-CU and ng-eNB-DU, respectively. The ng-eNB-CU and the ng-eNB-DU may be connected via a W1 interface.

The wireless communication network 100 may also include at least one User Equipment (UE) 130. The UE 130 may be implemented as mobile or fixed communication devices which are capable of accessing the wireless communication network 100. The UE 130 may include but is not limited to mobile phones, laptop computers, tablets, personal digital assistants, wearable devices, IoT/NB-IoT devices, MTC/eMTC devices, distributed remote sensor devices, roadside assistant equipment, and desktop computers. The UE 130 may communicate with the base station through Over the Air (OTA) radio communication interface and resources. As shown in FIG. 1, the OTA interface may include multiple ratio carriers 132 and 134. A radio carrier may further be an anchor carrier or a non-anchor carrier. Each base station may further support at least one cell and a physical location may be covered by multiple cells. The UE130 may choose a best cell to camp on or connect to for wireless service.

The wireless communication network 100 may be implemented as, for example, a 2G, 3G, 4G/LTE, or 5G cellular communication network. Correspondingly, the base stations 122 and 124 may be implemented as a 2G base station, a 3G NodeB, an LTE eNB, or a 5G NR gNB (even though, the base station 122 is labeled as an eNB and the base station 124 is labeled as gNB for illustration purposes).

While the description below focuses on cellular wireless communication systems as shown in FIG. 1, the underlying principles are applicable to other types of wireless communication systems supporting wireless devices. These other wireless systems may include but are not limited to Wi-Fi, Bluetooth, ZigBee, and WiMax networks.

### General MBS Configuration Dissemination

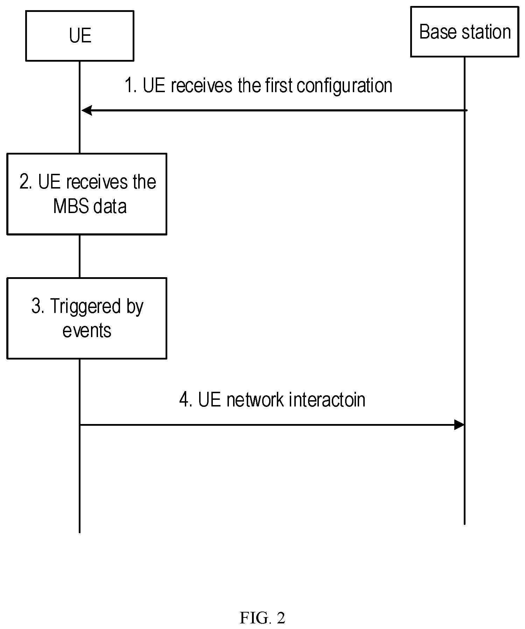

FIG. 2 shows exemplary steps in an MBS session.

Step 1. UE receives the first configuration from the network. The first configuration may include the initial MBS configuration for the UE. The MBS configuration enables the UE to receive the MBS data in RRC_CONNECTED, RRC_IDLE, or RRC_INACTIVE state. Optionally the MBS configuration may include the configuration on how UE monitors and receives the MBS configuration update. The first MBS configuration may be included in an RRC Release signaling.

Step 2. UE receives the MBS data from the network.

Step 3. UE is triggered by a predefined event. There may be multiple predefined triggering events. The predefined triggering event may be a notification from the network (e.g., base station). For example, the event may be that the UE receives an MBS configuration update notification indicating there is an updated MBS configuration for the UE to receive. The event may further include other types of events. For example, the event may be that the UE receives an MBS configuration update notification indicating that the MBS is about to be stopped or suspended, UE might release or suspend the existing MBS configuration and stop monitoring the transmission of the MBS data. For example, the event may be that the UE detects its MBS reception quality falls below a predefined threshold.

Step 4. UE network interaction. After the detection of a triggering event, UE may be triggered to perform further UE and network (e.g., base station) interaction based on the triggering event. For example, UE may be triggered to receive the updated MBS configuration from the broadcast control channel (or may be referred to as broadcast signaling); or UE may request its RRC state transition to RRC_CONNECTED state to receive the updated MBS configuration in dedicated signaling; or UE may be triggered to report MBS related information such as MBS reception report to the network, so the network may make corresponding MBS configuration update on the MBS session.

### MBS Configuration Content

For a UE participating an MBS, a first MBS configuration may be provided to the UE by the base station. The MBS configuration may be updated from time to time, for example, due to a change of network resource availability. The UE needs to update to the latest MBS configuration whenever an update happens in order to receive uninterrupted service. The UE may participate in multiple MBSs. In this case, the UE may have an MBS configuration corresponding to each of the MBSs.

The MBS configuration (the first MBS configuration, or the updated MBS configuration) includes following parameters:
- MBS ID, which identifies the MBS in the scope of the network, e.g., TMGI (Temporary Mobile Group Identity), G-RNTI (group Radio Network Temporary Identifier).
- MBS index which identifies the MBS in the scope of the UE;
- Bearer configuration: This includes the radio bearer configuration and RLC bearer configuration, which further includes the radio bearer identity, logical channel identity and the associations between these two identities.
- Resource allocation information: This includes the physical layer RNTI which identifies the MBS data transmission, e.g., Group specific RNTI, or MBS specific RNTI, such as G-RNTI; cell information of the cell transmitting the MBS; time domain and frequency domain information (e.g., frequency range); and physical layer channel configuration of the MBS transmission in physical layer (e.g., PDCCH and PDSCH configuration);
- A notification configuration: The UE monitor an MBS configuration update notification based on the notification configuration.
- A reception configuration: After the UE receives an MBS configuration update notification, the UE receives the updated MBS configuration from a broadcast channel based on the reception configuration.
- The configuration of UE trigger condition. The UE may be triggered to initiate the mode switching request. The triggering threshold of the MBS reception status may be configured to the UE. The threshold may be a value of packet loss rate or error rate. The UE may be triggered to report the MBS reception status to network, in which the periodic reporting timer and enabling information may be configured to UE. If MBS reception status report is enabled, UE reports MBS reception status to network periodically based on the configuration.

The time domain information in this disclosure comprises the radio frame information and/or sub-frame information, which may further include the period and offset information of the radio frame and the sub-frame, respectively, or a combination of them.

The frequency domain information in this disclosure comprised the bandwidth part (BWP), and/or the frequency range information.

A packet loss rate in this disclosure may be defined as: in a time window T, the ratio between the number of lost packets and the total number of received packets. One packet corresponds to one PDCP Service Data Unit (SDU) or PDCP Protocol Data Unit (PDU). The total number of received PDCP packets may be defined as: during the time window T, the difference between the highest received PDCP packet Serial Number (SN) and the lowest received PDCP packet SN. The number of lost PDCP packets may be defined as: during the time window T, the number of PDCP packet that are lost between the highest PDCP packet SN and the lowest PDCP packet SN. The time window T may be a pre-configured time duration. A packet may belong to one specific radio bearer; a subset of the radio bearers of one specific MBS session; all the radio bearers of one specific MBS session; or all the radio bearers of all the MBS session that the UE is associated with. Therefore, the packet loss rate may be defined with different granularities, such as per radio bearer, per MBS, or per UE. In some embodiments, based on the granularity, the packet loss rate may be associated with an identifier (ID) of a radio bearer and/or an MBS identifier (ID). The ratio may be further quantified into an integer (e.g., by multiplying with a predefined number and taking a floor or ceiling operation).

The error rate may be a Block Error Rate (BLER). The BLER may be computed over a measurement period, as the ratio between the number of received transport blocks resulting in Cyclic Redundancy Check (CRC) errors and the total number of received transport blocks of a specific MBS or MBS session. In some embodiments, the calculation may be performed for all the related Hybrid Automatic Repeat Request (HARQ) processes that are associated with the MBS service. The measurement period may be a configured time duration. The error rate may be a rate that is computed based on the number of errors of downlink initial transport blocks over the total number of downlink initial transport blocks. The error rate may have a granularity associated with a Modulation and Coding Scheme (MCS). For example, the error rate only takes into account of the transport blocks that use the same MCS. For another example, the error rate may have a granularity of the MBS to account for all MCSs associated with the MBS. The error rate may be further quantified into an integer (e.g., by multiplying with a predefined number and taking a floor or ceiling operation).

### Type of MBS Configuration Update

The MBS configuration may be updated due to various reasons and there are multiple types of MBS configuration update, which are listed below:
- The MBS configuration is about to be modified. For example, the network decides to update the bearer configuration since the mapped QoS flow or the QoS flow profile is updated, or the network decides to update the resource allocation including the time domain and/or frequency domain information for better scheduling;
- In some other cases, network may decide to switch the MBS reception mode of the UE between Point to Multipoint (PTM) and Point to Point (PTP);
- MBS service is about to start. Optionally this may be triggered by an explicit signaling from 5G Core Network (5GC) that the MBS session is about to be started in the session management signaling.
- MBS service is about to stop. Optionally this may be triggered by an explicit signaling from 5GC that the MBS session is about to be stopped in the session management signaling.
- MBS service is about to suspend. Optionally this may be triggered by an explicit signaling from 5GC that the MBS session is about to be suspended or deactivated in the session management signaling.
- MBS service is about to resume. Optionally this may be triggered by an explicit signaling from 5GC that the MBS session is about to be resumed in the session management signaling.

In some scenarios, the term of suspend is used interchangeably with deactivate. In some scenarios, the term of resume is used interchangeably with activate.

### Event triggered from UE

In some scenarios, the predefined event may be triggered by the UE based on the first MBS configuration. For example, when the UE detects its MBS reception quality is below a predefined threshold, the predefined threshold may be carried in the MBS configuration.

### Handling MBS Configuration Update

Step1: Whenever there is an MBS configuration update, the UE first needs to get notified that there is an update. Based on the type of the MBS configuration update, the UE performs the corresponding action:
- For MBS service start, UE might establish the bearer and start monitoring the MBS transmission in MAC/PHY layer based on the first or updated MBS configuration (see step 2 below for receiving the updated MBS configuration).
- For MBS service stop, UE releases the resources associated with the MBS, including the bearer configuration and stop monitoring the transmission in MAC/PHY layer.
- For MBS service suspend, UE suspend the allocated resources associated with the MBS, including the bearer configuration, and stop monitoring the transmission in MAC/PHY layer.
- For MBS service resume, UE resume the MBS configuration associated with the MBS, including resume the bearer configuration, and resume monitoring and receiving the transmission in MAC/PHY layer.

Step 2: This step in optional and involves UE and network interaction. For certain kind of MBS configuration update, for example, in the case the MBS configuration is about to be modified, the UE needs to receive the updated MBS configuration. There are two options for the UE to receive the updated MBS configuration:
Option A. UE relies only on dedicated RRC signaling to receive the MBS configuration. UE may receive the MBS data in different RRC states, e.g., RRC_CONNECTED, RRC_INACTIVE, or RRC_IDLE. UE is supposed to receive the MBS configuration in RRC_CONNECTED state. If the UE is not in RRC_CONNECTED state, UE may be triggered by the network or other events to request RRC Resume: to transition to RRC_CONNECTED state to receive the updated MBS configuration.
Option B. UE relies on a broadcast control channel to receive the MBS configuration or part of the MBS configuration. UE may receive the MBS data in different RRC states, e.g., RRC_CONNECTED, RRC_INACTIVE, or RRC_IDLE. Depending on the receiving UE RRC states or the respective MBS requirements, UEs may be notified by different mechanisms about the MBS configuration change in the broadcast control channel. UE may then be able to receive the updated MBS configuration according to predefined MBS configuration reception configuration. This predefined MBS configuration reception configuration may be sent to the UE when UE receives the first configuration, or using a separate RRC message during an MBS session. In some implementations, the predefined MBS configuration reception configuration defines the time domain and frequency domain information for the UE to receive the updated MBS configuration.

In this disclosure, various methods for the UE to receive the notification on the MBS configuration update are described. Various methods for the UE to further receive the updated MBS configuration are also described.

### Receiving Notification of MBS Configuration update

Various methods for the UE to receive the MBS configuration update notification are described in detail below.

### Notification Mechanism 1

In some implementations, the notification is sent in a broadcast channel. The notification may apply to a single MBS service or an MBS service group including multiple MBSs. The UE that are associated or interested in a certain MBS may monitor the broadcast channel for the notification based on notification configuration, the notification configuration includes at least one of: time domain information such as a notification cycle, radio frame information, sub-frame information, or on duration timer for the MBS configuration update notification. The base station may send the MBS configuration update notification in a notification cycle whenever there is an MBS configuration update. The notification cycle may be defined by radio frame. For example, the notification cycle may contain 64, 128, or 256 radio frames. Within each notification cycle, there may be a radio frame carrying the MBS configuration update notification. The notification configuration also includes information for this radio frame. For example, the radio frame may be defined by an offset from the start of each notification cycle. Optionally, the MBS configuration update notification may be defined as MBS specific, and different notification scheduling information may apply to different MBSs. For a UE that is associated with more than one MBS, the UE monitors the MBS configuration update notification for each MBS. In some implementations, transmissions of the MBS configuration update notification may be associated with a predefined Radio Network Temporary Identifier (RNTI). The RNTI may be a cell level identifier. In this case, the MBS configuration update notification applies to all the MBSs transmitted by the cell. The RNTI may also be associated with an MBS group. In this case, the MBS configuration update notification applies to all the MBSs in the MBS group. The RNTI may also be associated with a single MBS, for example, the RNTI may be a group-RNTI (G-RNTI). Furthermore, the RNTI may be associated with a DCI, and the DCI is associated with a data payload. The data payload may include one of an MBS identity such as G-RNTI; an MBS index; an MBS ID (e.g., TMGI) or any other kind of identifier that uniquely identifies the MBS service.

In some implementations, MBS configuration update notification may be carried in system information block (SIB), or a multicast control channel or paging message.

### Notification Mechanism 2

In another example, the notification mechanism relies on the notification transmission along with the transmission of the MBS data. There are also a few optional choices:
2.1. Layer 1 notification: For UE that are interested or associated with one specific MBS, UE receives the MBS data by monitoring the transmission of DCI identified by per MBS RNTI, e.g., G-RNTI (group RNTI). The MBS configuration update may be indicated on DCI, e.g., by using 1 bit indicating that the MBS configuration is about to be updated. There are optionally other information (e.g., additional bits) in the DCI to indicate that the MBS configuration update, for example, the MBS is about to be updated, to start, suspend, stop, or mode switching command for the corresponding MBS, as described earlier.
2.2. Medium Access Control layer Control Element (MAC CE): The MBS configuration update may be indicated in one specific MAC CE with a specific logical channel ID, which indicates that the MBS configuration is about to be updated. There are optionally other information within the same or separate MAC CE to indicate that MBS configuration update, for example, the MBS is about to be updated, to start, suspend, stop, or mode switching command for the corresponding MBS, as described earlier in this disclosure, the information in the MAC CE can be directly identified by the predefined LCID in the sub-header of the MAC CE, or optionally in the bit stream in the MAC CE.
2.3. Separate logical channel: The MBS configuration may be transmitted in one separated logical channel, and transmitted to the UE in the same method as the MBS data. The MBS configuration might be multiplexed with the MBS data, or transmitted separately. After the UE receives the MBS configuration, UE applies the configuration and receives the MBS data based on the updated MBS configuration. In this option, the MBS configuration update notification include the updated MBS configuration, so the UE gets notified about the update and receives the updated MBS configuration in one step.

### Notification Mechanism 3

Dedicated RRC signaling: The network may send the MBS configuration update notification using Dedicated RRC signaling.

After the UE receives the MBS configuration update notification, and the notification indicates there is updated MBS configuration for the UE to receive, the UE will be triggered to receive the updated MBS configuration.

### Receiving MBS Configuration (for both first configuration and updated configuration)

In one implementation, UE is released to RRC_INACTIVE state and continues to receive the MBS service data. When the MBS configuration is about to be updated, and the UE receives the MBS configuration update notification (through a mechanism described above), UE performs the random access procedure to transit to RRC_CONNECTED state to receive the updated MBS configuration. Optionally, cause value which identify the type of MBS notification may be indicated in the RRC resume signaling.

In another implementation, after UE receives the MBS configuration update notification (e.g., for a PTM configuration update), UE checks the broadcast control channel based on broadcast control channel configuration information (e.g., time and frequency domain information) to receive the updated MBS configuration. The broadcast control channel configuration information is also referred to as a reception configuration. Optionally, if the MBS is about to be stopped or suspended, UE sends a confirmation to the network without further checking the broadcast control channel - since there is no need to do so in case of MBS session is stopped or suspended. The UE stops receiving the MBS until further notifications is received notifying the MBS service start or resume. Optionally, the UE may send a confirmation message to the base station to confirm the receipt of the MBS configuration update notification.

The reception configuration may be delivered to UE beforehand and may include:
- Time domain information, including the modification cycle information of the broadcast control channel;
- Frequency domain information including the Bandwidth Part (BWP) information, the frequency range of the control channel, the configuration of the physical channel that carries the broadcast control channel; and
- The cell information.

In another implementation, after UE receives the notification of the PTM configuration update, UE checks the broadcast control channel based on the reception configuration (time and frequency domain information) to receive the updated MBS configuration as in step4 in the general procedure. In some implementations, if the MBS is about to be stopped or suspended, UE sends the confirmation about the notification without checking the broadcast control channel (since there is no need to do so, as UE stops receiving the MBS until notifications on the service start or resume is received later).

In another example, after UE successfully receives the updated MBS configuration on the broadcast control channel, UE sends feedback to the network, to confirm the MBS configuration update. The confirmation may be sent using 3 kinds of signaling messages:
- RRC signaling, for example, UE sends the confirmation or acknowledge in a RRC message.
- MAC CE, e.g., a predefined logical channel (with predefined logical channel ID) to indicate the successful MBS configuration update; and
- Layer 1 signaling, e.g., 1bit information carried in PUSCH.

### Additional UE Actions

After the UE has been notified about the MBS configuration update, UE takes action based on the type of the MBS configuration.
- For MBS service start, UE might establish the bearer and start monitoring the MBS transmission in MAC/PHY layer based on the updated configuration.
- For MBS service stop, UE releases the resources associated with the MBS, including the bearer configuration and stop monitoring the transmission in MAC/PHY layer.
- For MBS service suspend, UE suspend the allocated resources associated with the MBS, including the bearer configuration, and stop monitoring the transmission in MAC/PHY layer.
- For MBS service resume, UE resume the MBS configuration associated with the MBS, including resume the bearer configuration, and resume the monitoring of the transmission in MAC/PHY layer.

### Embodiment 1

In this embodiment, UE is released to RRC_INACTIVE state and UE continues to receive the MBS service data. When the MBS configuration is about to be updated, UE needs to be notified by the network about such update to continue the reception of the MBS data with updated MBS configuration. The UE may use the notification mechanism 1, notification mechanism 2.1, 2.2, and 2.3, to receive the MBS configuration update notification.

After the UE received the MBS configuration update notification that the MBS configuration is about to be updated, UE will then performs the random access procedure to transition to RRC_CONNECTED state to receive the updated MBS configuration, in which UE may use the RRC Resume cause value to inform the network about the reasons why the UE initiating the RRC state transitioning.

### Embodiment 2

In this embodiment, the UE is in RRC_CONNECTED state and the MBS configuration or part of the MBS configuration is transmitted in the broadcast control channel. The network may utilize a dedicated signaling as described in notification mechanism 3 to notify the UE about the MBS configuration update. Alternatively, the network may also use notification mechanism 2.1 and 2.2 to serve the same purpose. The updated MBS configuration may include: PTM configuration update, MBS service is about to start, stop, suspend or resume.

The reception configuration, including scheduling information on time domain and frequency domain, may be delivered to the UE beforehand and may include:
- Time domain information, which may include the modification cycle information of the broadcast control channel;
- Frequency domain information including the Bandwidth Part (BWP) information, the frequency range of the control channel, the configuration of the physical channel that carries the broadcast control channel; and
- Cell information for the cell transmitting the MBS.

The UE then receives the updated MBS configuration based on the reception configuration.

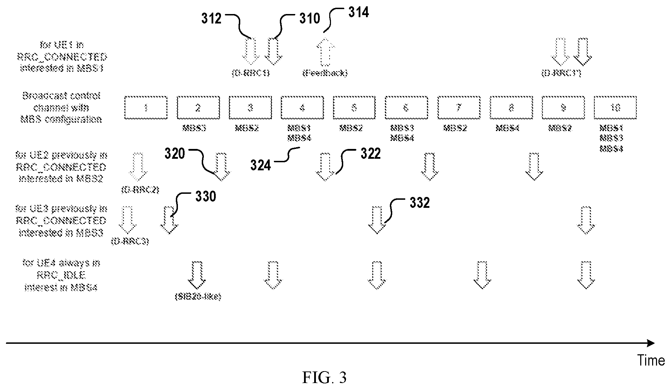

Referring to FIG.3, UE1 is in RRC_CONNECTED state and is interested in MBS1. When the MBS1 configuration is about to be updated (or MBS1 session is about to start, stop, suspend or resume), the network notifies the UE about the coming update using one of the notification mechanisms at 310. The UE may receive the updated MBS configuration based on the reception configuration which includes the scheduling information of the broadcast control channel. The reception information may be sent to UE1 in 312 using the dedicated RRC signaling message (D-RRC1). FIG. 3 shows that the UE1 receives the updated MBS configuration on broadcast control channel information block 4 which is labeled as 324.

After UE1 successfully receives the updated MBS configuration, UE1 sends a feedback to the network to indicate or confirm that the new MBS configuration has been received, or the new MBS configuration has been deployed.

### Embodiment 3

In this embodiment, the UE may be in RRC_IDLE or RRC_INACTIVE state but was previously in RRC_CONNECTED state. The UE may be configured with the broadcast control channel scheduling information, also referred to as a reception configuration. And the UE may be configured with the notification configuration. Referring to FIG. 3, the base station may send the notification configuration and the reception configuration to the UE in dedicated RRC signaling message (e.g., D-RRC2, or D-RRC3). Once the UE receives a MBS configuration update notification through the notification mechanism described earlier based on the notification configuration, the UE receives the updated MBS configuration from the broadcast control channel based on the reception configuration. The notification configuration may include:
- Notification cycle;
- Time domain information;
- Frequency domain information; and
- Layer 1 notification ID (a physical layer Radio Network Temporary Identifier, which may be used by the UE to monitor the transmission of the broadcast control channel update notification).

The reception configuration may include:
- modification period;
- repetition period;
- re-transmission number;
- sub-frame information;
- radio-frame information;
- duration information;
- Layer 1 ID (a physical layer Radio Network Temporary Identifier, which may be used by the UE to monitor the transmission of the broadcast control channel);
- frequency domain information including the Bandwidth Part (BWP) information, the frequency range of the control channel, the configuration of the physical channel that carries the broadcast control channel; and
- cell information for the cell transmitting the MBS.

The reception configuration may have different level of granularity and it may be per MBS group, per MBS, or per UE. For example, the modification period may be per MBS, which means each MBS is associated with its own specific modification period. Or the modification period may be per MBS group, which means all the MBSs in the MBS group are associated with the same modification period. For another example, if the reception configuration is per UE, then the UE receives the updated MBS configuration based on the same reception configuration for all the MBSs that the UE participates.

The UE receives updated MBS configuration in a cyclic repetition period. In particular, the UE may locate the specific sub-frame carrying the updated MBS configuration based on the sub-frame information as configured in the reception configuration. Similar to the notification cycle described earlier, the modification cycle may also be define by radio frames. If the UE is associated with more than one MBS service, UE receives updated MBS configuration for each of the MBS according to the reception configuration.

The repetition period is a time period within the modification period, within which the same updated MBS configuration may be re-transmitted according to the re-transmission number. For example, if the re-transmission number is 5, then the same updated MBS configuration may be re-transmitted for 5 times based on the repetition period, to obtain a more reliable data transmission. As such, the UE may receive updated MBS configuration from the broadcast channel multiple times in case previous reception fails. In some implementations, the re-transmission number and the repetition period may or may not be the same for each MBS.

Layer 1 notification ID in the notification configuration is a physical layer Radio Network Temporary Identifier (RNTI), which is used by the UE to monitor the notification of MBS update. The layer 1 notification ID may be per MBS, which means for each MBS, such ID is different. In this case, the UE monitors updated MBS configuration for each MBS independently. The layer 1 notification ID may be per MBS group, which means for each MBS group, such ID is different. The layer 1 notification ID may be per cell, which means for the same cell, such ID is the same or predefined.

Layer 1 ID in the reception configuration is a physical layer Radio Network Temporary Identifier (RNTI), which is used by the UE to monitor the MBS configuration transmission in the broadcast control channel. The layer 1 ID may be per MBS, which means for each MBS, such ID is different. In this case, the UE monitors updated MBS configuration for each MBS independently. The layer 1 ID may be per MBS group, which means for each MBS group, such ID is different. The layer 1 ID may be per cell, which means for the same cell, such ID is the same or predefined.

Refer to FIG. 3 as an example. Assume that UE2 is interested in MBS2 and UE3 is interested in MBS3. UE2 and UE3 are released to RRC_INACTIVE state for some reason based on network decision, for example, to reduce the network load. Before UE2 and UE3 are released, UE2 and UE3 both receive information from dedicated RRC signaling message D-RRC2 and D-RRC3, respectively, on how to receive the MBS configuration update notification and the updated MBS configuration on the broadcast control channel. The information includes a notification configuration to instruct the UE on how to monitor the MBS configuration update notification. The information also includes a reception configuration to instruct the UE on how to receive the updated MBS configuration. Alternatively, such configuration information may be delivered to UE2 and UE3 in any other RRC signaling message before the UEs are released or in the RRC release signaling.

For example, for UE2, D-RRC2 includes following information:
- Repetition Period, R2
- modification period, M2
- Re-transmission number. N2
- Sub-frame information
- duration information
- Layer 1 notification ID, RNTI2

For UE3, D-RRC3 includes following information:
- Repetition Period, R3
- modification period, M3
- Re-transmission number. N3
- Sub-frame information,
- duration information
- Layer 1 notification ID, RNTI3

M2 and M3 are different. UE2 and UE3 monitor the MBS configuration update notification based on their corresponding notification configuration. For MBS2, it has higher requirement on the control plane latency compared with MBS3, therefore the modification period for MBS2 on UE2 is shorter than the modification period for MBS3 on UE3. As shown in FIG.3, the modification period for MBS2 on UE2 is the time period between 320 and 322, and the modification period for MBS3 on UE3 is the time period between 330 and 332.

UE2 and UE3 receive updated MBS configuration based on their corresponding reception configuration. Furthermore, if the updated MBS configuration in the broadcast control channel is transmitted with repetition, after UE2 and UE3 receive the MBS configuration update notification, UE 2 and UE3 may keep receiving the updated MBS configuration based on the repetition period and re-transmission number, and based on the sub-frame information.

In some implementations, the Layer 1 ID, RNTI, and the Layer 1 notification ID may be the same or different in the dedicated signaling sent to UE2 and UE3. For example, if one specific UE is interested in both MBS2 and MBS3, and the RNTIs associated with MBS2 and MBS3 are different, then the UE needs to monitor both notification and receive updated MBS configuration from the broadcast control channels independently based on the notification and reception configuration, as the notification and reception configuration may have different scheduling information for MBS2 and MBS3.

In some implementations, the notification cycle in the notification configuration may or may not be the same as the modification cycle in the reception configuration.

### Embodiment 4

The MBS configuration includes the bearer configuration associated with the MBS service. UE establishes the radio bearers according to the received MBS configuration. The MBS configuration may further include the resource allocation information of the MBS service.

In one example, as shown in FIG. 2, UE may receive part of or all the MBS configuration in step 1 when receiving the first configuration by dedicated signaling message. Alternatively, UE may receive part of or all the MBS configuration later in broadcast control channel, or in another signaling message.

For certain part of the MBS configuration that is common to all the UEs receiving the MBS data, it may be carried in the dedicated signaling or Broadcast control channel; for certain part of the MBS configuration that is specific to a certain UE, the MBS configuration may be sent through dedicated signaling message to the UE. For example, if the radio bearer ID space is per MBS, it is common to all UE who are interested in the MBS. If the radio bearer ID space if per UE, it is specific to one UE and may be sent to UE in a dedicated signaling.

The MBS configuration or part of the MBS configuration may be sent to the UE in an RRC Release signaling message (e.g., in FIG. 2, step 1) before UE is released to RRC_INACTIVE state.

The MBS configuration may include:

### • RBID (radio bearer ID)

The RBID may be per UE or per MBS.

If the RBID is per UE, it means that the radio bearer associated with the MBS can be identified within the scope of one specific UE. The configuration of RBID may be delivered to UE in dedicated RRC signaling.

If the RBID is per MBS, it means the radio bearer associated with the MBS may be identified within the scope of one specific MBS. The configuration of RBID can be delivered to UE through dedicated signaling or broadcast control channel. In the dedicated signaling, the radio bearer may be identified by the RBID and is in the scope of one specific MBS.

### • LCID (logical channel ID)

For radio bearers associated with the MBS, there may be two different logical channels or RLC entities serving the same radio bearer. In an MBS session, UE receives the MBS data from either the point to multi-point (PTM) type RLC entity (or the first RLC entity/logical channel) or the point to point (PTP) type RLC entity (second RLC entity or logical channel), based on the configuration from network. The two different logical channels or RLC entities may be associated with the same RBID if both RLC entities are configured to the same UE.

### PTM Transmission Mode

If the UE receives MBS in PTM transmission mode (or PTM mode), the LCID of the PTM type RLC entity or logical channel may be per UE per cell group, or per MBS.

If the LCID is per UE per cell group, it means the logical channel is identified within the scope of one specific UE and its associated cell group. The configuration of LCID may be delivered to the UE in dedicated RRC signaling. In the configuration, there are two LCIDs (LCID1 and LCID2) associated with the PTM type RLC entity or logical channel. Whenever UE receives MAC PDU in which there are MAC Service Data Unit (SDU) identified by LCID1, the MAC SDU is submitted to the RLC entity or logical entity identified by LCID2 in the receiving UE. That is, the mapping from LCID1 to LCID2 instructs the UE how to deliver the MAC SDU to the corresponding RLC entity.

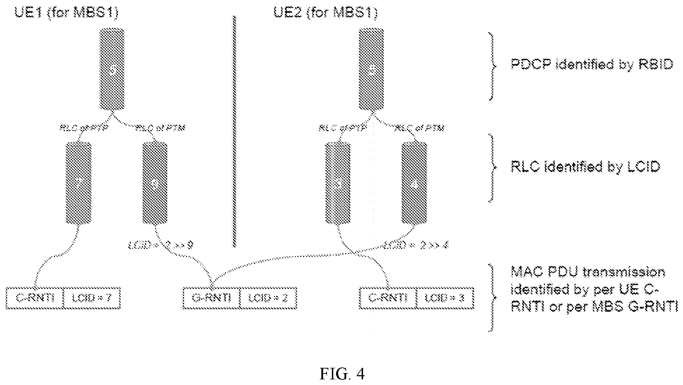

For example, as shown in FIG. 4, a PTM type RLC entity is associated with two LCIDs: 2 and 9 for UE1, and 2 and 4 for UE2. Therefore for UE1, the MAC subPDU identified by LCID 2 will be submitted to the RLC entity identified by LCID 9; for UE2, the MAC subPDU identified by LCID 2 will be submitted to the RLC entity identified by LCID 4.

If the LCID is per MBS, it means the logical channel is identified by the UE within the scope of one specific MBS, or the logical channel needs to be identified in a specific name space associated with the MBS. For example, a same LCID 8 may be used for both MBS 1 and MBS 2, and it may be read as MBS 1 plus LCID8, or MBS 2 plus LCID 2 for the UE to identify the logical channels if UE is interested in both MBS1 and MBS2. The configuration of LCID may be delivered to UE in dedicated RRC signaling or in the broadcast channel. There is one LCID associated with the PTM type RLC entity or logical channel for one specific MBS. Whenever UE receives MAC PDU in the MBS data transmission identified by a group or MBS specific G-RNTI, based on the association of the G-RNTI and MBS service, the MAC SDU is submitted to the specific RLC entity or logical channel associated with the MBS based on the LCID in the MAC PDU sub-header.

### PTP Transmission Mode

The LCID of the PTP type (or the second) RLC entity or logical channel may be per UE per cell group, or per MBS.

If the LCID is per UE per cell group, it means the logical channel is identified within the scope of one specific UE and its associated cell group. The configuration of LCID may be delivered to the UE in dedicated RRC signaling.

If the LCID is per MBS, it means the logical channel is identified within the scope of one specific MBS. The configuration of LCID may be delivered to the UE in dedicated RRC signaling or broadcast control channel. For PTP transmission identified by UE specific physical layer ID, e.g., C-RNTI (cell RNTI), the related MAC SDU shall be submitted to the logical channel or RLC entity identified by the per MBS LCID. Therefore, the MBS information may be included in the DCI identified by C-RNTI of the UE, or in the sub-header of the MAC subPDU associated with the corresponding MBS and the logical channel. The MBS information includes MBS identity that may be used by the UE to identify the MBS service, e.g., MBS index configured to the UE, or MBS session ID, or TMGI.

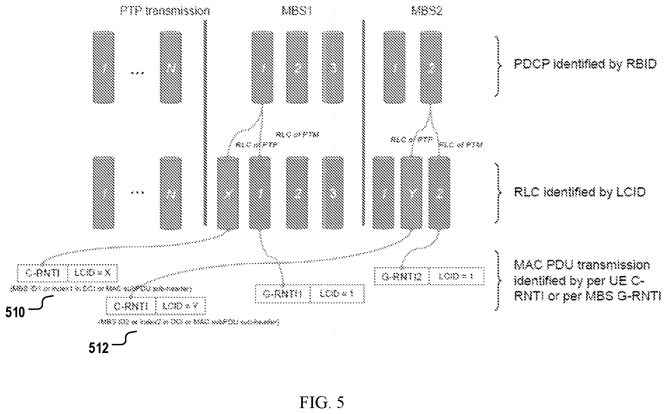

For example, referring to FIG. 5, for the PTP transmission, the MBS information 510 is carried in the DCI of the PTP transmission or in the MAC subPDU sub-header. The MBS information identifies the PTP transmission is for MBS 1, therefore, the corresponding MAC SDU will be submitted to the corresponding RLC entity identified by LCID of the MAC subPDU, which is the RLC entity X of MBS 1. Similarly, the PTP transmission with MBS information 512 will be will be submitted to the RLC entity Y of MBS 2, as the MBS information 512 identifies the PTP transmission is for MBS 2, and the LCID indicated by the MAC subPDU is Y.

### Embodiment 5

In some implementations, UE is configured with the PTM configuration for an MBS before the UE is released to RRC_INACTIVE state. The UE receives the MBS data based on the received PTM configuration. UE is further configured with the events definition as defined earlier in the MBS configuration in which thresholds or timer might be defined. When the predefined thresholds is reached or the enabled timer expires periodically, UE triggers the RRC resume procedure.

For example, UE is configured with the condition when to initiate the RRC resume to transition to RRC_CONNECTED state. A parameter of threshold value may be configured on the UE as defined in the first or updated MBS configuration. The parameter may reflect the MBS reception quality. When the reception quality is below the configured threshold, UE initiates the RRC state transition procedure, to resume to RRC_CONNECTED state to request the MBS mode switching from PTM to PTP. The mode switching request may be carried in the uplink information in different options:
- In the cause value of the RRC Resume message.
- In the MAC CE with separate logical channel ID, and multiplexed with the RRC Resume message.
- In the RRC resume message.
- In a separate RRC uplink information.

For another example, UE is configured with the reception status report of one MBS or a list of MBSs UE is associated with. The UE is configured with the report period or report timer, and in each report period or the enabled timer periodically expires, UE reports the reception status in RRC Resume request message. UE initiates the RRC state transition procedure periodically based on the configured report period. The reception status report may be carried in the uplink information in different options:
- In the MAC CE with separate logical channel ID, and multiplexed with the RRC Resume message.
- In the RRC resume message.
- In a separated RRC uplink information.

As a response, the network may release the UE after the reception status report is received successfully or resume the RRC connection for other reasons.

Optionally, the network may be able to disable or enable the report during an MBS session.

The description and accompanying drawings above provide specific example embodiments and implementations. The described subject matter may, however, be embodied in a variety of different forms and, therefore, covered or claimed subject matter is intended to be construed as not being limited to any example embodiments set forth herein. A reasonably broad scope for claimed or covered subject matter is intended. Among other things, for example, subject matter may be embodied as methods, devices, components, systems, or non-transitory computer-readable media for storing computer codes. Accordingly, embodiments may, for example, take the form of hardware, software, firmware, storage media or any combination thereof. For example, the method embodiments described above may be implemented by components, devices, or systems including memory and processors by executing computer codes stored in the memory.

Throughout the specification and claims, terms may have nuanced meanings suggested or implied in context beyond an explicitly stated meaning. Likewise, the phrase "in one embodiment/implementation" as used herein does not necessarily refer to the same embodiment and the phrase "in another embodiment/implementation" as used herein does not necessarily refer to a different embodiment. It is intended, for example, that claimed subject matter includes combinations of example embodiments in whole or in part.

In general, terminology may be understood at least in part from usage in context. For example, terms, such as "and", "or", or "and/or," as used herein may include a variety of meanings that may depend at least in part on the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein, depending at least in part upon context, may be used to describe any feature, structure, or characteristic in a singular sense or may be used to describe combinations of features, structures or characteristics in a plural sense. Similarly, terms, such as "a," "an," or "the," may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

Reference throughout this specification to features, advantages, or similar language does not imply that all of the features and advantages that may be realized with the present solution should be or are included in any single implementation thereof. Rather, language referring to the features and advantages is understood to mean that a specific feature, advantage, or characteristic described in connection with an embodiment is included in at least one embodiment of the present solution. Thus, discussions of the features and advantages, and similar language, throughout the specification may, but do not necessarily, refer to the same embodiment.

Furthermore, the described features, advantages and characteristics of the present solution may be combined in any suitable manner in one or more embodiments. One of ordinary skill in the relevant art will recognize, in light of the description herein, that the present solution can be practiced without one or more of the specific features or advantages of a particular embodiment. In other instances, additional features and advantages may be recognized in certain embodiments that may not be present in all embodiments of the present solution.

## Claims

1. A method for receiving multicast broadcast service, MBS, by a user equipment (130), UE, in a wireless network (100), comprising:
receiving a first message comprising a first MBS configuration associated with the MBS from a first network element (120) of the wireless network, wherein the first message comprises a dedicated radio resource control, RRC, message including a notification configuration corresponding to how to receive an MBS configuration update notification and a reception configuration corresponding to how to receive an updated MBS configuration on a broadcast control channel, wherein the notification configuration is received prior to releasing the UE to an RRC inactive, RRC_INACTIVE, state;
receiving, based on the notification configuration, the MBS configuration update notification from the first network element; and
receiving, based on the reception configuration, the updated MBS configuration sent from the first network element.

2. The method of claim 1, wherein the first message releases the UE to the RRC inactive, RRC_INACTIVE, state.

3. The method of claim 1, wherein each of the first MBS configuration and the updated MBS configuration is used by the UE to receive the MBS and comprises at least one of:
an MBS identifier, MBS ID, identifying the MBS;
an MBS index identifying the MBS in the scope of the UE;
a bearer configuration, comprising:
a radio bearer configuration;
a radio link control, RLC, bearer configuration; and
at least one radio bearer identifier, RBID, at least one logical channel identifier, LCID, and the association between the at least one RBID and the at least one LCID;
resource allocation information;
the notification configuration used to receive the MBS configuration update notification; or
the reception configuration used to receive the MBS configuration from the broadcast control channel.

4. The method of claim 3, wherein the resource allocation information comprises at least one of:
a radio network temporary identifier, RNTI, associated with the MBS;
a group RNTI, G-RNTI, associated with the MBS;
cell information of a cell transmitting the MBS;
time domain and frequency domain information for the MBS; or
physical layer channel configuration of the MBS, and/or
wherein the MBS configuration update notification comprises at least one of:
a notification that the MBS configuration is about to be modified;
a notification that the MBS is about to start;
a notification that the MBS is about to stop;
a notification that the MBS is about to suspend;
a notification that the MBS is about to resume;
a notification that a Point to Multipoint, PTM, configuration, or a Point to Point, PTP, configuration is about to be modified; or
a notification that a transmission mode switching between PTP and PTM is required.

5. The method of claim 4, wherein after receiving the MBS configuration update notification from the first network element, the method further comprises sending a confirmation message to the first network element.

6. The method of claim 4, wherein receiving the MBS configuration update notification sent from the first network element comprises receiving the MBS configuration update notification via a physical layer notification, in particular the physical layer notification comprises a Downlink Control Information, DCI, associated with an identifier, the identifier comprising at least one of the MBS ID, a MBS group including the MBS, or the MBS index, or
wherein receiving the MBS configuration update notification sent from the first network element comprises receiving the MBS configuration update notification via a Medium Access Control layer Control Element, MAC CE, wherein the MAC CE is associated with a predefined logical channel ID.

7. A method for transmitting multicast broadcast service, MBS, by a first network element (120) in a wireless network (100), comprising:
sending a first message comprising a first MBS configuration associated with the MBS to a User Equipment (130), UE, of the wireless network, wherein the first message comprises a dedicated radio resource control, RRC, message including a notification configuration corresponding to how to receive an MBS configuration update notification and a reception configuration corresponding to how to receive an updated MBS configuration on a broadcast control channel, wherein the notification configuration is received prior to releasing the UE to an RRC inactive, RRC_INACTIVE, state;
sending, based on the notification configuration, the MBS configuration update notification to the UE; and
sending, based on the reception configuration, the updated MBS configuration to the UE.

8. The method of claim 7, wherein the first message releases the UE to the RRC inactive, RRC_INACTIVE, state.

9. The method of claim 7, wherein each of the first MBS configuration and the updated MBS configuration is used by the UE to receive the MBS and comprises at least one of:
an MBS identifier, MBS ID, identifying the MBS;
an MBS index identifying the MBS in the scope of the UE;
a bearer configuration, comprising:
a radio bearer configuration;
a radio link control, RLC, bearer configuration; and
at least one radio bearer identifier, RBID, at least one logical channel identifier, LCID, and the association between the at least one RBID and the at least one LCID;
resource allocation information;
the notification configuration used to receive the MBS configuration update notification; or
the reception configuration used to receive the MBS configuration from the broadcast control channel.

10. The method of claim 9, wherein the resource allocation information comprises at least one of:
a radio network temporary identifier, RNTI, associated with the MBS;
a group RNTI, G-RNTI, associated with the MBS;
cell information of a cell transmitting the MBS;
time domain and frequency domain information for the MBS; or
physical layer channel configuration of the MBS, and/or
wherein the MBS configuration update notification comprises at least one of:
a notification that the MBS configuration is about to be modified;
a notification that the MBS is about to start;
a notification that the MBS is about to stop;
a notification that the MBS is about to suspend;
a notification that the MBS is about to resume;
a notification that a Point to Multipoint, PTM, configuration, or a Point to Point, PTP, configuration is about to be modified; or
a notification that a transmission mode switching between PTP and PTM is required.

11. The method of claim 10, wherein after sending the MBS configuration update notification to the UE, the method further comprises receiving a confirmation message from the UE.

12. The method of claim 10, wherein sending the MBS configuration update notification to the UE comprises sending the MBS configuration update notification via a physical layer notification, in particular the physical layer notification comprises a Downlink Control Information, DCI, associated with an identifier, the identifier comprising at least one of the MBS ID or the MBS index, or
wherein sending the MBS configuration update notification to the UE comprises sending the MBS configuration update notification via a Medium Access Control layer Control Element, MAC CE, wherein the MAC CE is associated with a predefined logical channel ID.

13. A device (130) comprising a memory for storing computer instructions and a processor in communication with the memory, wherein, when the processor executes the computer instructions, the processor is configured to cause the device to:
receive a first message comprising a first MBS configuration associated with the MBS from a first network element (120) of the wireless network (100), wherein the first message comprises a dedicated radio resource control, RRC, message including a notification configuration corresponding to how to receive an MBS configuration update notification and a reception configuration corresponding to how to receive an updated MBS configuration on a broadcast control channel, wherein the notification configuration is received prior to releasing the device to an RRC inactive, RRC_INACTIVE, state;
receive, based on the notification configuration, the MBS configuration update notification from the first network element; and
receive, based on the reception configuration, the updated MBS configuration sent from the first network element.

14. A device (120) comprising a memory for storing computer instructions and a processor in communication with the memory, wherein the processor, when executing the computer instructions, is configured to implement a method of claim 7.

## Patentansprüche

1. Verfahren zum Empfangen eines Multicast-Broadcast-Dienstes, MBS, durch ein Benutzergerät (130), UE, in einem drahtlosen Netzwerk (100), aufweisend:
Empfangen einer ersten Nachricht, aufweisend eine erste MBS-Konfiguration, die dem MBS zugeordnet ist, von einem ersten Netzwerkelement (120) des drahtlosen Netzwerks, wobei die erste Nachricht eine dedizierte Funkressourcensteuerungsnachricht, RRC-Nachricht, aufweist, einschließlich einer Benachrichtigungskonfiguration, die damit übereinstimmt, wie eine MBS-Konfigurationsaktualisierungsbenachrichtigung empfangen werden soll, und einer Empfangskonfiguration, die damit übereinstimmt, wie eine aktualisierte MBS-Konfiguration auf einem Broadcast-Steuerungskanal empfangen werden soll, wobei die Benachrichtigungskonfiguration empfangen wird, bevor das UE in einen RRC-inaktiven, RRC_INACTIVE, Zustand freigegeben wird;
Empfangen der MBS-Konfigurationsaktualisierungsbenachrichtigung vom ersten Netzwerkelement basierend auf der Benachrichtigungskonfiguration; und
Empfangen der aktualisierten MBS-Konfiguration, die vom ersten Netzwerkelement gesendet wurde, basierend auf der Empfangskonfiguration.

2. Verfahren nach Anspruch 1, wobei die erste Nachricht das UE in den RRC-inaktiven, RRC_INACTIVE, Zustand freigibt.

3. Verfahren nach Anspruch 1, wobei die erste MBS-Konfiguration und die aktualisierte MBS-Konfiguration jeweils durch das UE zum Empfangen des MBS verwendet werden und mindestens eines aufweisen von:
einer MBS-Kennung, MBS-ID, zum Identifizieren des MBS;
einem MBS-Index, der den MBS im Bereich des UE identifiziert;
einer Trägerkonfiguration, aufweisend:
eine Funkträgerkonfiguration;
eine Funkverbindungssteuerungsträgerkonfiguration, RLC-Trägerkonfiguration; und
mindestens eine Funkträgerkennung, RBID, mindestens eine Kennung eines logischen Kanals, LCID, und die Zuordnung zwischen der mindestens einen RBID und der mindestens einen LCID;
Ressourcenverteilungsinformationen;
der Benachrichtigungskonfiguration, die zum Empfangen der MBS-Konfigurationsaktualisierungsbenachrichtigung verwendet wird; oder
der Empfangskonfiguration, die zum Empfangen der MBS-Konfiguration vom Broadcast-Steuerungskanal verwendet wird.

4. Verfahren nach Anspruch 3, wobei die Ressourcenverteilungsinformationen mindestens eines aufweisen von:
einer temporären Funknetzwerkkennung, RNTI, die dem MBS zugeordnet ist;
einer Gruppen-RNTI, G-RNTI, die dem MBS zugeordnet ist;
Zellinformationen einer Zelle, die den MBS überträgt;
Zeitbereichs- und Frequenzbereichsinformationen für den MBS; oder
einer Kanalkonfiguration einer physikalischen Schicht des MBS und/oder
wobei die MBS-Konfigurationsaktualisierungsbenachrichtigung mindestens eines aufweist von:
einer Benachrichtigung, dass die MBS-Konfiguration in Kürze geändert wird;
einer Benachrichtigung, dass der MBS in Kürze startet;
einer Benachrichtigung, dass der MBS in Kürze stoppt;
einer Benachrichtigung, dass der MBS in Kürze eingestellt wird;
einer Benachrichtigung, dass der MBS in Kürze wieder aufgenommen wird;
einer Benachrichtigung, dass eine Punkt-zu-Mehrpunkt-Konfiguration, PTM-Konfiguration, oder eine Punkt-zu-Punkt-Konfiguration, PTP-Konfiguration, in Kürze geändert wird; oder
einer Benachrichtigung, dass ein Wechsel eines Übertragungsmodus zwischen PTP und PTM erforderlich ist.

5. Verfahren nach Anspruch 4, wobei nach dem Empfangen der MBS-Konfigurationsaktualisierungsbenachrichtigung vom ersten Netzwerkelement das Verfahren ferner ein Senden einer Bestätigungsnachricht an das erste Netzwerkelement aufweist.

6. Verfahren nach Anspruch 4, wobei das Empfangen der vom ersten Netzwerkelement gesendeten MBS-Konfigurationsaktualisierungsbenachrichtigung das Empfangen der MBS-Konfigurationsaktualisierungsbenachrichtigung über eine Benachrichtigung der physikalischen Schicht aufweist, insbesondere die Benachrichtigung der physikalischen Schicht eine Downlink-Steuerungsinformation, DCI, aufweist, die einer Kennung zugeordnet ist, wobei die Kennung aufweisend mindestens eines von der MBS-ID, einer MBS-Gruppe einschließlich des MBS, oder dem MBS-Index aufweist; oder
wobei das Empfangen der vom ersten Netzwerkelement gesendeten MBS-Konfigurationsaktualisierungsbenachrichtigung das Empfangen der MBS-Konfigurationsaktualisierungsbenachrichtigung über ein Mediumzugangssteuerungsschichtsteuerungselement, MAC CE, aufweist, wobei das MAC CE einer vordefinierten ID des logischen Kanals zugeordnet ist.

7. Verfahren zum Übertragen eines Multicast-Broadcast-Dienstes, MBS, durch ein erstes Netzwerkelement (120) in einem drahtlosen Netzwerk (100), aufweisend:
Senden einer ersten Nachricht, aufweisend eine erste MBS-Konfiguration, die dem MBS zugeordnet ist, an ein Benutzergerät (130), UE, des drahtlosen Netzwerks, wobei die erste Nachricht eine dedizierte Funkressourcensteuerungsnachricht, RRC-Nachricht, aufweist, einschließlich einer Benachrichtigungskonfiguration, die damit übereinstimmt, wie eine MBS-Konfigurationsaktualisierungsbenachrichtigung empfangen werden soll, und einer Empfangskonfiguration, die damit übereinstimmt, wie eine aktualisierte MBS-Konfiguration auf einem Broadcast-Steuerungskanal empfangen werden soll, wobei die Benachrichtigungskonfiguration empfangen wird, bevor das UE in einen RRC-inaktiven, RRC_INACTIVE, Zustand freigegeben wird;
Senden der MBS-Konfigurationsaktualisierungsbenachrichtigung an das UE basierend auf der Benachrichtigungskonfiguration; und
Senden der aktualisierten MBS-Konfiguration an das UE basierend auf der Empfangskonfiguration.

8. Verfahren nach Anspruch 7, wobei die erste Nachricht das UE in den RRC-inaktiven, RRC_INACTIVE, Zustand freigibt.

9. Verfahren nach Anspruch 7, wobei die erste MBS-Konfiguration und die aktualisierte MBS-Konfiguration jeweils durch das UE zum Empfangen des MBS verwendet werden und mindestens eines aufweisen von:
einer MBS-Kennung, MBS-ID, zum Identifizieren des MBS;
einem MBS-Index, der den MBS im Bereich des UE identifiziert;
einer Trägerkonfiguration, aufweisend:
eine Funkträgerkonfiguration;
eine Funkverbindungssteuerungsträgerkonfiguration, RLC-Trägerkonfiguration; und
mindestens eine Funkträgerkennung, RBID, mindestens eine Kennung des logischen Kanals, LCID und die Zuordnung zwischen der mindestens einen RBID und der mindestens einen LCID;
Ressourcenverteilungsinformationen;
der Benachrichtigungskonfiguration, die zum Empfangen der MBS-Konfigurationsaktualisierungsbenachrichtigung verwendet wird; oder
der Empfangskonfiguration, die zum Empfangen der MBS-Konfiguration vom Broadcast-Steuerungskanal verwendet wird.

10. Verfahren nach Anspruch 9, wobei die Ressourcenverteilungsinformationen mindestens eines aufweisen von:
einer temporären Funknetzwerkkennung, RNTI, die dem MBS zugeordnet ist;
einer Gruppen-RNTI, G-RNTI, die dem MBS zugeordnet ist;
Zellinformationen einer Zelle, die den MBS überträgt;
Zeitbereichs- und Frequenzbereichsinformationen für den MBS; oder
der Kanalkonfiguration der physikalischen Schicht des MBS und/oder
wobei die MBS-Konfigurationsaktualisierungsbenachrichtigung mindestens eines aufweist von:
einer Benachrichtigung, dass die MBS-Konfiguration in Kürze geändert wird;
einer Benachrichtigung, dass der MBS in Kürze startet;
einer Benachrichtigung, dass der MBS in Kürze stoppt;
einer Benachrichtigung, dass der MBS in Kürze eingestellt wird;
einer Benachrichtigung, dass der MBS in Kürze wieder aufgenommen wird;
einer Benachrichtigung, dass eine Punkt-zu-Mehrpunkt-Konfiguration, PTM-Konfiguration, oder eine Punkt-zu-Punkt-Konfiguration, PTP-Konfiguration, in Kürze geändert wird; oder
einer Benachrichtigung, dass ein Wechsel des Übertragungsmodus zwischen PTP und PTM erforderlich ist.

11. Verfahren nach Anspruch 10, wobei nach dem Senden der MBS-Konfigurationsaktualisierungsbenachrichtigung an das UE das Verfahren ferner das Empfangen einer Bestätigungsnachricht vom UE aufweist.

12. Verfahren nach Anspruch 10, wobei das Senden der MBS-Konfigurationsaktualisierungsbenachrichtigung an das UE das Senden der MBS-Konfigurationsaktualisierungsbenachrichtigung über eine Benachrichtigung der physikalischen Schicht aufweist, insbesondere die Benachrichtigung der physikalischen Schicht eine Downlink-Steuerungsinformation, DCI, aufweist, die einer Kennung zugeordnet ist, wobei die Kennung mindestens eines von der MBS-ID oder dem MBS-Index aufweist, oder
wobei das Senden der MBS-Konfigurationsaktualisierungsbenachrichtigung an das UE das Senden der MBS-Konfigurationsaktualisierungsbenachrichtigung über ein Mediumzugangssteuerungsschichtsteuerungselement, MAC CE, aufweist, wobei das MAC CE einer vordefinierten ID des logischen Kanals zugeordnet ist.

13. Vorrichtung (130), aufweisend einen Speicher zum Speichern von Computeranweisungen und einen Prozessor, der mit dem Speicher in Kommunikation steht, wobei, wenn der Prozessor die Computeranweisungen ausführt, der Prozessor konfiguriert ist, um die Vorrichtung zu veranlassen zum:
Empfangen einer ersten Nachricht, aufweisend eine erste MBS-Konfiguration, die dem MBS zugeordnet ist, von einem ersten Netzwerkelement (120) des drahtlosen Netzwerks (100),
wobei die erste Nachricht eine dedizierte Funkressourcensteuerungsnachricht, RRC-Nachricht, aufweist, einschließlich einer Benachrichtigungskonfiguration, die damit übereinstimmt, wie eine MBS-Konfigurationsaktualisierungsbenachrichtigung empfangen werden soll, und einer Empfangskonfiguration, die damit übereinstimmt, wie eine aktualisierte MBS-Konfiguration auf einem Broadcast-Steuerungskanal empfangen werden soll, wobei die Benachrichtigungskonfiguration empfangen wird, bevor die Vorrichtung in einen RRC-inaktiven, RRC_INACTIVE, Zustand freigegeben wird;
Empfangen der MBS-Konfigurationsaktualisierungsbenachrichtigung vom ersten Netzwerkelement basierend auf der Benachrichtigungskonfiguration; und
Empfangen der aktualisierten MBS-Konfiguration, die vom ersten Netzwerkelement gesendet wurde, basierend auf der Empfangskonfiguration.

14. Vorrichtung (120), aufweisend einen Speicher zum Speichern von Computeranweisungen und einen Prozessor, der mit dem Speicher in Kommunikation steht, wobei der Prozessor bei einem Ausführen der Computeranweisungen konfiguriert ist, um ein Verfahren nach Anspruch 7 zu implementieren.

## Revendications

1. Procédé de réception d'un service de diffusion multidiffusion, MBS, par un équipement utilisateur (130), UE, dans un réseau sans fil (100), comprenant :
la réception d'un premier message comprenant une première configuration MBS associée au MBS à partir d'un premier élément de réseau (120) du réseau sans fil, dans lequel le premier message comprend un message de commande de ressources radio, RRC, dédié comportant une configuration de notification correspondant à la manière de recevoir une notification de mise à jour de configuration MBS et une configuration de réception correspondant à la manière de recevoir une configuration MBS mise à jour sur un canal de commande de diffusion, dans lequel la configuration de notification est reçue avant la libération de l'UE vers un état RRC inactif, RRC_INACTIVE ;
la réception, sur la base de la configuration de notification, de la notification de mise à jour de configuration MBS à partir du premier élément de réseau ; et
la réception, sur la base de la configuration de réception, de la configuration MBS mise à jour envoyée à partir du premier élément de réseau.

2. Procédé selon la revendication 1, dans lequel le premier message libère l'UE vers l'état RRC inactif, RRC_INACTIVE.

3. Procédé selon la revendication 1, dans lequel chacune de la première configuration MBS et de la configuration MBS mise à jour est utilisée par l'UE pour recevoir le MBS et comprend au moins l'un parmi :
un identifiant MBS, MBS ID, identifiant le MBS ;
un index MBS identifiant le MBS dans la portée de l'UE ;
une configuration de support, comprenant :
une configuration de support radio ;
une configuration de support de commande de liaison radio, RLC ; et
au moins un identifiant de support radio, RBID, au moins un identifiant de canal logique, LCID, et l'association entre l'au moins un RBID et l'au moins un LCID ;
des informations d'attribution de ressources ;
la configuration de notification utilisée pour recevoir la notification de mise à jour de configuration MBS ; ou
la configuration de réception utilisée pour recevoir la configuration MBS à partir du canal de commande de diffusion.

4. Procédé selon la revendication 3, dans lequel les informations d'attribution de ressource comprennent au moins l'un parmi :
un identifiant temporaire de réseau radio, RNTI, associé au MBS ;
un RNTI de groupe, G-RNTI, associé au MBS ;
des informations de cellule d'une cellule transmettant le MBS ;
des informations de domaine temporel et de domaine fréquentiel pour le MBS ; ou
une configuration de canal de couche physique du MBS, et/ou
dans lequel la notification de mise à jour de configuration de MBS comprend au moins l'une parmi :
une notification indiquant que la configuration MBS est sur le point d'être modifiée ;
une notification indiquant que le MBS est sur le point de démarrer ;
une notification indiquant que le MBS est sur le point de s'arrêter ;
une notification indiquant que le MBS est sur le point d'être suspendu ;
une notification indiquant que le MBS est sur le point de reprendre ;
une notification indiquant qu'une configuration point à multipoint, PTM, ou une configuration point à point, PTP, est sur le point d'être modifiée ; ou
une notification indiquant qu'une commutation de mode de transmission entre PTP et PTM est nécessaire.

5. Procédé selon la revendication 4, dans lequel, après la réception de la notification de mise à jour de configuration MBS à partir du premier élément de réseau, le procédé comprend en outre l'envoi d'un message de confirmation au premier élément de réseau.

6. Procédé selon la revendication 4, dans lequel la réception de la notification de mise à jour de configuration MBS envoyée à partir du premier élément de réseau comprend la réception de la notification de mise à jour de configuration MBS par l'intermédiaire d'une notification de couche physique, en particulier la notification de couche physique comprend des informations de commande de liaison descendante, DCI, associées à un identifiant, l'identifiant comprenant au moins l'un parmi le MBS ID, un groupe MBS comportant le MBS, ou l'index MBS, ou
dans lequel la réception de la notification de mise à jour de configuration MBS envoyée à partir du premier élément de réseau comprend la réception de la notification de mise à jour de configuration MBS par l'intermédiaire d'un élément de commande de couche de commande d'accès au support, MAC CE, dans lequel le MAC CE est associé à un ID de canal logique prédéfini.

7. Procédé de transmission d'un service de diffusion multidiffusion, MBS, par un premier élément de réseau (120) dans un réseau sans fil (100), comprenant :
l'envoi d'un premier message comprenant une première configuration MBS associée au MBS à un équipement utilisateur (130), UE, du réseau sans fil, dans lequel le premier message comprend un message de commande de ressources radio, RRC, dédié comportant une configuration de notification correspondant à la manière de recevoir une notification de mise à jour de configuration MBS et une configuration de réception correspondant à la manière de recevoir une configuration MBS mise à jour sur un canal de commande de diffusion, dans lequel la configuration de notification est reçue avant la libération de l'UE vers l'état RRC inactif, RRC_INACTIVE ;
l'envoi, sur la base de la configuration de notification, de la notification de mise à jour de configuration MBS à l'UE ; et
l'envoi, sur la base de la configuration de réception, de la configuration MBS mise à jour à l'UE.

8. Procédé selon la revendication 7, dans lequel le premier message libère l'UE vers l'état RRC inactif, RRC_INACTIVE.

9. Procédé selon la revendication 7, dans lequel chacune de la première configuration MBS et de la configuration MBS mise à jour est utilisées par l'UE pour recevoir le MBS et comprend au moins l'un parmi :
un identifiant MBS, MBS ID, identifiant le MBS ;
un index MBS identifiant le MBS dans la portée de l'UE ;
une configuration de support, comprenant :
une configuration de support radio ;
une configuration de support de commande de liaison radio, RLC ; et
au moins un identifiant de support radio, RBID, au moins un identifiant de canal logique, LCID, et l'association entre l'au moins un RBID et l'au moins un LCID ;
des informations d'attribution de ressources ;
la configuration de notification utilisée pour recevoir la notification de mise à jour de configuration MBS ; ou
la configuration de réception utilisée pour recevoir la configuration MBS à partir du canal de commande de diffusion.

10. Procédé selon la revendication 9, dans lequel les informations d'attribution de ressources comprennent au moins l'un parmi :
un identifiant temporaire de réseau radio, RNTI, associé au MBS ;
un RNTI de groupe, G-RNTI, associé au MBS ;
des informations de cellule d'une cellule transmettant le MBS ;
des informations de domaine temporel et de domaine fréquentiel pour le MBS ; ou
une configuration de canal de couche physique du MBS, et/ou
dans lequel la notification de mise à jour de configuration de MBS comprend au moins l'une parmi :
une notification indiquant que la configuration MBS est sur le point d'être modifiée ;
une notification indiquant que le MBS est sur le point de démarrer ;
une notification indiquant que le MBS est sur le point de s'arrêter ;
une notification indiquant que le MBS est sur le point d'être suspendu ;
une notification indiquant que le MBS est sur le point de reprendre ;
une notification indiquant qu'une configuration point à multipoint, PTM, ou une configuration point à point, PTP, est sur le point d'être modifiée ; ou
une notification indiquant qu'une commutation de mode de transmission entre PTP et PTM est nécessaire.

11. Procédé selon la revendication 10, dans lequel, après l'envoi de la notification de mise à jour de configuration MBS à l'UE, le procédé comprend en outre la réception d'un message de confirmation à partir de l'UE.

12. Procédé selon la revendication 10, dans lequel l'envoi de la notification de mise à jour de configuration MBS à l'UE comprend l'envoi de la notification de mise à jour de configuration MBS par l'intermédiaire d'une notification de couche physique, en particulier la notification de couche physique comprend des informations de commande de liaison descendante, DCI, associées à un identifiant, l'identifiant comprenant au moins l'un parmi le MBS ID ou l'index MBS, ou
dans lequel l'envoi de la notification de mise à jour de configuration MBS à l'UE comprend l'envoi de la notification de mise à jour de configuration MBS par l'intermédiaire d'un élément de commande de couche de commande d'accès au support, MAC CE, dans lequel le MAC CE est associé à un ID de canal logique prédéfini.

13. Dispositif (130) comprenant une mémoire permettant de stocker des instructions informatiques et un processeur en communication avec la mémoire, dans lequel, lorsque le processeur exécute les instructions informatiques, le processeur est configuré pour amener le dispositif à :
recevoir un premier message comprenant une première configuration MBS associée au MBS à partir d'un premier élément de réseau (120) du réseau sans fil (100),
dans lequel le premier message comprend un message de commande de ressources radio, RRC, dédié comportant une configuration de notification correspondant à la manière de recevoir une notification de mise à jour de configuration MBS et une configuration de réception correspondant à la manière de recevoir une configuration MBS mise à jour sur un canal de commande de diffusion, dans lequel la configuration de notification est reçue avant la libération du dispositif vers l'état RRC inactif, RRC_INACTIVE ;
recevoir, sur la base de la configuration de notification, la notification de mise à jour de configuration MBS à partir du premier élément de réseau ; et
recevoir, sur la base de la configuration de réception, la configuration MBS mise à jour envoyée à partir du premier élément de réseau.

14. Dispositif (120) comprenant une mémoire permettant de stocker des instructions informatiques et un processeur en communication avec la mémoire, dans lequel le processeur, lorsqu'il exécute les instructions informatiques, est configuré pour mettre en œuvre un procédé selon la revendication 7.
